# EUROPEAN PATENT APPLICATION

(11) **EP 4 686 592 A1**
(43) Date of publication of application: **04.02.2026**
(21) Application number: 25193079.8
(22) Date of filing: 31.07.2025
(51) Int. Cl.: B60K 1/00

(54) **ELECTRIC AXLE ARCHITECTURE FOR IMPROVED EFFICIENCY AND SERVICE ABILITY**

(30) Priority: 31.07.2024 US 202463677922 P
(71) Applicant: Cummins Inc., Columbus, IN 47201 (US)
(72) Inventor: Grunwald, Silvia, Columbus, 47201 (US); Gallege, Nuwan Janaka, Columbus, 47201 (US); Keeney, Christopher, Columbus, 47201 (US)
(74) Representative: Whitfield, Jack Stephen

(57) **Abstract**

The present disclosure provides an eAxle assembly for an electric vehicle and method of installation. The eAxle assembly comprises an axle shaft along a first axis and a carrier configured to support internal components. The internal components comprise an electric motor along the first axis such that the electric motor is concentric and coaxial with the axle shaft and a transmission geared to the electric motor by a first, second, and third gearset. The transmission may transmit torque through the first and second gearsets by a first transmission shaft and through the third gearset by the first transmission shaft only.

## Description

### CROSS-REFERENCE TO RELATED APPLICATIONS

This application claims the benefit of priority under 35 U.S.C. § 119(e) to U.S. Provisional Application No. 63/677,922, filed on July 31, 2024, and titled " THREE SPEED GEAR BOX ARCHITECTURE FOR IMPROVED EFFICIENCY AND SERVICEABILITY".

### FIELD

The present disclosure relates generally to electric axle assemblies, and in particular, axle assemblies including an electric motor housed within a carrier such that the electric motor is concentric with an axle shaft.

### BACKGROUND

High demands for electric driven and hybrid electric assisted vehicles have driven innovation in the industry. Hybrid electric vehicles and electric vehicles use electric motor driven axles, which can be implemented in multi-axle configurations in vehicles. Primarily sized to meet both torque and speed requirements, these electric motors may not be the most effective or size-efficient for the operational requirements of such vehicles. Arranging an electric motor perpendicular to or offset from the axis of the axle shaft of the axle assembly creates a larger packaging space required for the electric axle assembly and could increase energy losses by requiring additional gears and/or shafts to communicate power to the axle shaft from the electric motor. Perpendicular and offset electric motors may lead to complexities and difficulties in the serviceability of the axle assembly. Moreover, the large electric motors may be difficult to package in a multi-axle vehicle configuration as their footprint can encroach on otherwise usable space or cause otherwise absent design constraints.

### SUMMARY

An electrified axle, carrier for the electrified axle, and method of assembling the electrified axle are examples of embodiments provided by the present disclosure.

The present disclosure provides a method of assembling an electric axle (eAxle) assembly for an electric vehicle, the method comprising: arranging a carrier assembly to be received at an axle housing of the eAxle assembly; and securing the carrier assembly to the axle housing. The carrier assembly comprising at least one of: an electric motor configured to convert electrical energy into mechanical torque generation to propel the vehicle; power electronics configured to control a flow of electricity at the electric motor; and a transmission configured to transmit torque from the electric motor to traction components geared to a transmission output and operatively connected to the eAxle assembly to rotate on an axle about an axle axis. The carrier assembly orienting the electric motor to be parallel and coaxial with the axle. The transmission may be a multispeed transmission geared to the electric motor via a plurality of gearsets, the multispeed transmission configured to transmit the torque generated by the electric motor to the traction components at a speed and a torque that is a multiple thereof. The plurality of gearsets may be optimized to most efficiently operate at a gearset associated with the highest speed. The plurality of gearsets may be operatively connected to a plurality of transmission shaft. The plurality of gearsets may include a first gearset associated with a first speed, a second gearset associated with a second speed that is greater than the first speed, and a third gearset associated with a third speed that is greater than the first and second speeds, transmit torque through the first and second gearsets includes transmitting torque through first and second transmission shafts of the plurality of transmission shafts, transmitting torque through the third gearset includes transmitting torque through the first transmission shaft only. The multispeed transmission may be a 3-speed transmission.

The present disclosure may further provide an electrified axle for a vehicle, comprising an axle assembly. The axle assembly may comprise an axle shaft along a first axis and a carrier configured to support internal components. The internal components may comprise: an electric motor. The electric motor may be along the first axis such that the electric motor is parallel and coaxial with the axle shaft.

The present disclosure may provide a carrier for supporting internal components of an axle assembly that is connectible to an electric motor, the carrier comprising a body supporting internal components. The internal components may include at least one of: an electric motor; a transmission assembly that is configured to operatively mount to an electric motor for powering the transmission assembly; a shifting assembly that is configured to shift between gears of the transmission assembly, and a differential assembly that operatively connects to the transmission assembly so as to transmit torque from the transmission assembly to at least one axle of the axle assembly. The electric motor may be along the first axis such that the electric motor is parallel and coaxial with an axle shaft of the axle assembly.

The present disclosure may provide a carrier assembly for an electrified axle (eAxle), comprising: a carrier configured to mount to a housing of the eAxle; an electric motor carried by the carrier, the electric motor being configured to convert electrical energy into mechanical torque; and an axle shaft extending concentrically through the electric motor, such that an axis of the electric motor is coaxial with an axis of the axle shaft, wherein the axle shaft is configured to receive the mechanical torque.

The electric motor may further comprise: a motor housing configured to be carried by the carrier; an oil sump; a stator: and a rotor. The stator may be fixed to the motor housing. The axis of the electric motor coaxial with the axis of the axle shaft may be a rotational axis of the rotor.

The stator may be passively cooled by the oil sump.

The carrier may further comprise: a transmission assembly electrically coupled to the electric motor. The transmission assembly may comprise a plurality of transmission shafts; a differential assembly operatively coupled to the transmission assembly, wherein the differential assembly may comprise a plurality of gearsets each operably coupled to at least one of the plurality of transmission shafts and configured to transmit torque from the transmission assembly to the axle shaft; and a shifting assembly configured to shift between the plurality of gearsets.

The axle shaft may transmit torque from the differential assembly to corresponding traction wheel assemblies.

The plurality of transmission shafts may comprise a first transmission shaft and a second transmission shaft. The plurality of gearsets may include a first gearset associated with a first speed, a second gearset associated with a second speed that is greater than the first speed, and a third gearset associated with a third speed that is greater than the first and second speeds. Transmitting torque through the first gearset and the second gearset may include transmitting torque through the first transmission shaft and the second transmission shaft of the plurality of transmission shafts. Transmitting torque through the third gearset may include transmitting torque through the first transmission shaft only.

The shifting assembly may comprise a shift lever, shift forks, shift rails, and synchronizers. The synchronizers may be configured to shift between the plurality of gearsets during operation of the electric motor.

The present disclosure may provide an electric axle for a vehicle, comprising: an axle housing configured to mount to the vehicle; a carrier housing mounted to the axle housing; an electric motor carried by the carrier, the electric motor defining a first axis and being configured to convert electrical energy into mechanical torque; and an axle shaft carried by at least one of the carrier housing and the axle housing such that the axle shaft extends concentrically through the electric motor, wherein the axle shaft defines a second axis that is coaxial with the first axis.

The electric axle may further comprise: a transmission assembly carried by the carrier and configured to operatively mount to the electric motor for powering the transmission assembly. The transmission assembly may comprise a plurality of transmission shafts; a differential assembly carried by the carrier and operatively coupled to the transmission assembly so as to transmit torque from the transmission assembly to the axle shaft, wherein the differential assembly comprises a plurality of gearsets each operably coupled to at least one of the plurality of transmission shafts to transmit torque from the transmission assembly to the axle shaft; and a shifting assembly carried by the carrier and configured to shift between the plurality of gearsets.

The plurality of transmission shafts may comprise a first transmission shaft and a second transmission shaft.

The plurality of gearsets may include a first gearset associated with a first speed, a second gearset associated with a second speed that is greater than the first speed, and a third gearset associated with a third speed that is greater than the first and second speeds. Transmitting torque through the first gearset and the second gearset includes transmitting torque through the first transmission shaft and the second transmission shaft of the plurality of transmission shafts. Transmitting torque through the third gearset includes transmitting torque through the first transmission shaft only. The electric motor may further comprise a motor housing, an oil sump; a stator fixed to the motor housing, and a rotor. The stator may be passively cooled by the oil sump.

The present disclosure may provide a method of assembling an eAxle assembly for an electric vehicle, the method comprising: arranging a carrier assembly to be received at an axle housing of the eAxle assembly, the carrier assembly comprising: an electric motor configured to convert electrical energy into mechanical torque generation to propel the electric vehicle; and an axle shaft concentrically arranged with the electric motor such that an axis of the electric motor is coaxial with an axle shaft axis, wherein the axle shaft is configured to receive the mechanical torque; securing the carrier assembly to the axle housing.

The carrier may further comprise: power electronics configured to control a flow of electricity at the electric motor; and a transmission configured to transmit torque from the electric motor to traction components geared to a transmission output and operatively connected to the eAxle.

The transmission may be a multispeed transmission geared to the electric motor via a plurality of gearsets. The multispeed transmission may be configured to transmit the torque generated by the electric motor to the traction components at a speed and a torque that is a multiple thereof.

The plurality of gearsets may be optimized to most efficiently operate at a gearset associated with the highest speed.

The transmission may comprise a plurality of transmission shafts. The plurality of gearsets may be operatively connected to the plurality of transmission shafts. The plurality of gearsets may be configured to receive mechanical torque from the electric motor and transfer the mechanical torque to the axle shaft.

The plurality of transmission shafts may comprise a first transmission shaft and a second transmission shaft. The plurality of gearsets may include a first gearset associated with a first speed, a second gearset associated with a second speed that is greater than the first speed, and a third gearset associated with a third speed that is greater than the first and second speeds. Transmitting torque through the first gearset and the second gearset may include transmitting torque through the first transmission shaft and the second transmission shaft of the plurality of transmission shafts. Transmitting torque through the third gearset may include transmitting torque through the first transmission shaft only.

The multispeed transmission may be a 3-speed transmission.

The carrier assembly may be configured to be serviced without removing the axle shaft from the eAxle assembly.

### BRIEF DESCRIPTION OF THE DRAWINGS

The above-mentioned and other features and advantages of this disclosure, and the manner of obtaining them, will become more apparent, and will be better understood by reference to the following description of the exemplary embodiments taken in conjunction with the accompanying drawings, wherein:
FIG. 1 is a schematic diagram of a dual-axle multi-mode adjustable hybrid vehicle system with integrated front axle;
FIG. 2 is a schematic diagram of an integrated axle;
FIG. 3 is a schematic diagram of another dual-axle multi-mode adjustable hybrid vehicle system with integrated front axle;
FIG. 4 is a schematic diagram of an example of a three-axle multi-mode adjustable hybrid vehicle system with integrated front axle;
FIG. 5 is a schematic diagram of an example of a three-axle multi-mode adjustable hybrid vehicle system with integrated front axle;
FIG. 6 is a schematic diagram of an example of a three-axle multi-mode adjustable hybrid vehicle system with integrated front axle;
FIG. 7 is a schematic diagram of a controller operatively coupled with other components of the system;
FIG. 8A is a side elevation, partial cutaway view of an axle assembly, according to principles of the present disclosure;
FIG. 8B is an illustration of the electric motor shown in FIG. 8A;
FIG. 9 is a cross section of the axle assembly of the present disclosure;
FIG. 10A is a cross section of a known axle assembly with a perpendicular and offset engine;
FIG. 10B is a cross section of a known axle assembly with a perpendicular and offset engine;
FIG. 10C is a cross section of a known axle assembly with a parallel and offset engine;
FIG. 11A is an illustration of installation space when the axle assembly of the present disclosure is installed on an axle;
FIG. 11B is a top view of the axle assembly of FIG. 11A;
FIG. 12A is an illustration of installation space of a known axle assembly installed on an axle;
FIG. 12B is a top view of the known axle assembly of FIG. 12A;
FIG. 13 is a perspective view of the axle assembly of the present disclosure;
FIG. 14 is a diagram of the axle assembly of the present disclosure connected to a transmission, differential, and wheel assemblies;
FIG. 15A is a power flow diagram of the transmission of the axle assembly of the present disclosure in a first gearset;
FIG. 15B is a power flow diagram of the transmission of the axle assembly of the present disclosure in a second gearset;
FIG. 15C is a power flow diagram of the transmission of the axle assembly of the present disclosure in a third gearset;
FIG. 16A is a flow chart of a method of assembly of the carrier to the eAxle; and
FIG. 16B is a flow chart of a method of disassembly of the carrier to the eAxle.

Corresponding reference characters indicate corresponding parts throughout the several views. Although the drawings represent embodiments of various features and components according to the present disclosure, the drawings are not necessarily to scale and certain features may be exaggerated in order to better illustrate and explain the present disclosure. The exemplification set out herein illustrates an embodiment of the disclosure, and such an exemplification is not to be construed as limiting the scope of the disclosure in any manner.

### DETAILED DESCRIPTION

For the purposes of promoting an understanding of the principles of the present disclosure, reference is now made to the embodiments illustrated in the drawings, which are described below. The exemplary embodiments disclosed herein are not intended to be exhaustive or to limit the disclosure to the precise form disclosed in the following detailed description. Rather, these exemplary embodiments were chosen and described so that others skilled in the art may utilize their teachings.

The present disclosure generally relates to compact electric axles (eAxles), a gearset configuration, and a method of assembling the eAxle. Principles of the present disclosure use a combination of design considerations to provide an easy-to-assemble, compact, and/or lubriciously efficient eAxle. For instance, implementations of the principles include an eAxle with a cartridge housing structure that solves axle housing machining issues by providing an overall housing structure that comprises a carrier housing structure that includes an electric motor (or "eMotor") side transmission and a shifting assembly portion to form a transmission cartridge. The eAxle assembly of the present disclosure comprises an axle and a carrier assembly.

The current gear architecture of for medium to heavy-duty eAxles requires one center shaft, and two counter shafts as well as a crown and pinion to achieved ratio > 20 at perpendicular arrangement of shafts to the axle. Because of this TCS architecture, the counter shafts must always be 180 degrees opposite each other, which leads to limited flexibility in the gear shafts arrangement inside the given installation space. Furthermore, there are a lot of spur gears (eight teeth contacts total and five loaded teeth contacts) in permanent engagement. Four loaded tooth contacts (e.g., one at each of four gears) are needed when implementing gearbox double reduction. One additional loaded tooth contact is between pinion and crown gear. A high number of teeth contacts may have a negative impact on efficiency for whole axle.

Because the gearbox is intended for use in electric mobility applications, solutions must be both highly efficient and compatible with limited installation space. One effective approach to improving efficiency is to reduce the number of gear contacts, which minimizes mechanical losses during torque transfer. The present disclosure addresses this need through the integration of a three-speed spur gear transmission with an axle assembly. This architecture achieves efficient torque delivery through a reduced number of loaded gear contacts-specifically, five gear contacts across the drivetrain, including four loaded tooth contacts for the driven axle. The result is a compact and mechanically streamlined system capable of multi-speed operation with minimal hardware.

The eAxle assembly of the present disclosure may consist essentially of three shafts and nine spur gears. The shifting elements are distributed between two intermediate shafts, including a driven intermediate shaft that is coaxial with a driving intermediate shaft. This coaxial configuration enables torque to be transferred across all three gears through varied engagement paths. Because the shifting elements for all gear ranges are positioned along the intermediate shafts, the system may be configured to lock the driving and driven intermediate shafts together under certain conditions. This arrangement offers substantial efficiency gains-particularly in third gear, where only two loaded tooth contacts are required. The overall result is a drivetrain that reduces tooth engagement losses, lowers weight, and occupies less space than traditional axle configurations, making it especially well suited for modern electric vehicle platforms.

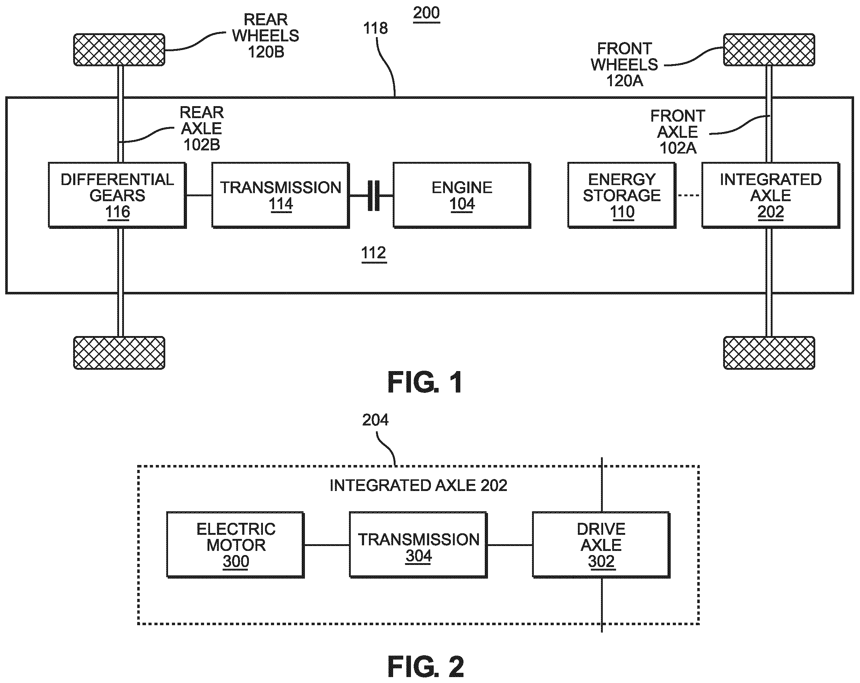

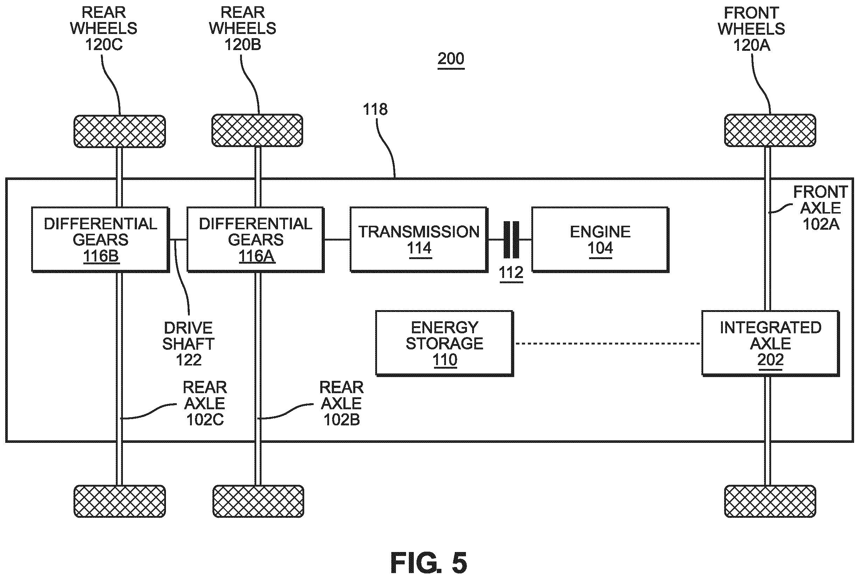

In general, the discussion hereinafter proceeds as follows: The principles illustrated and described in FIGS. 1 through 7 are applicable to the present disclosure. These figures show various multi-axle vehicle architectures, controller configurations, and integrated electric axle systems. While they do not depict the specific concentric arrangement described herein, they demonstrate foundational system-level relationships-such as the integration of electric motors, transmissions, and differentials-that are compatible with and may be implemented using the concentric and coaxial arrangements disclosed in the following figures.

Now turning to the figures, FIG. 1 shows an example of a multi-mode hybrid vehicle system 200 as disclosed herein. The system 200 includes a plurality of motive power sources. For example, an integrated axle 202 is mechanically coupled with a steerable front axle 102A such that the integrated axle 202 is used as a motive power source to provide the motive force to drive the front wheels 120A using electrical energy provided form the energy storage 110. The rear axle 102B is mechanically coupled with the differential gears 116, which is mechanically coupled with the transmission 114, which is mechanically coupled with or decoupled from the engine 104 via the clutch 112. The rear axle 102B, therefore, is controlled using the motive force provided by the engine 104, another power motive source. For simplicity, the inverter(s) for the integrated axle 202 and the fuel reservoir 108 coupled with the engine 104 are not shown.

As disclosed herein, an "integrated axle" includes a type of electric axle drive that is affixed to the wheels to rotate them. In examples, the integrated axle combines the functionality of an electric motor-generator, power electronics such as an inverter, and in some examples a cooling circuit to reduce cost and increase efficiency in a single component. Integrated axles are neither directly nor indirectly coupled with any combustion engine, thereby using solely the motor-generator included therein to provide mechanical power to a drive axle coupled thereto.

In some examples, the motor-generator of the integrated axle may be mounted on the drive axle. In some embodiments, the integrated axle is configured to reduce interfaces and components that may induce efficiency loss. Examples of such components include wires and copper cables that link the components together, plugs, bearings for rotating components, and separate cooling circuits for the electric motor and power electronics. The integrated axles are also more compact than the electric motor, the power electronics, and the cooling circuits therefor being individually installed, thus saving installation space within the chassis frames of the vehicle and allowing more room therein. Each integrated axle is configured independently of other integrated axle(s) in the system. In some examples, the integrated axle may also include a two-speed or three-speed gearbox.

As shown in the embodiment of FIG. 1, the integrated axle 202 is mechanically coupled with a drive axle 102, such as the front axle 102A as shown in FIG. 1. The drive axle 102 is mechanically coupled with a pair of wheels 120, such as the pair of front wheels 120A as shown in FIG. 1. Although not shown, a controller is electrically coupled with the integrated axle 202. Based on the inputs received, the controller turns on (activates or engages) or turns off (deactivates or disengages) one or more of these components to achieve the different modes shown herein. FIG. 2 shows some of the components of the integrated axle 202. For example, the integrated axle 202 includes an electric motor-generator 300, a drive axle 302, and a transmission 304. Other components such as the aforementioned inverter and/or cooling circuit may be included in the integrated axle 202, as suitable. These components are separately or independently operable from the other components (e.g., the transmission 304 is separately operable from the transmission 114). The components of the integrated axle 202 (e.g., the electric motor-generator and at least a portion of the drive axle, etc.) may be mechanically mated to, coupled to, affixed to, or implemented within a common housing 204. The housing may be any suitable structure which supports the positioning of the components, as well as to provide protection of the components.

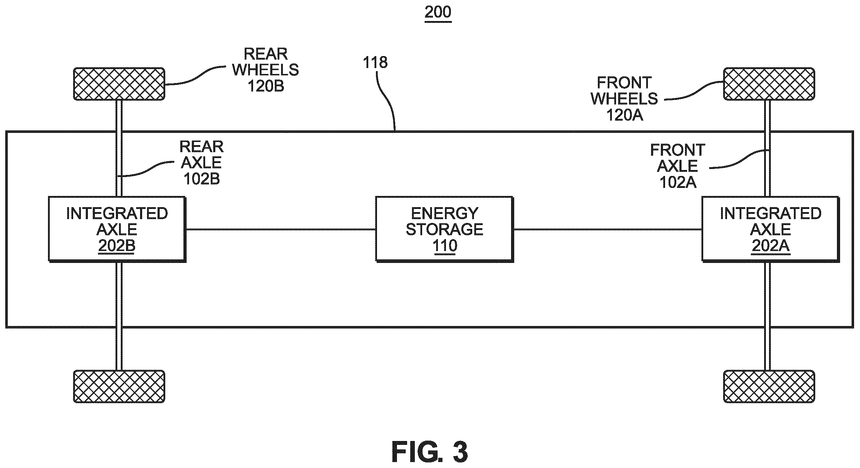

FIG. 3 shows an example of the system 200 which incorporates two integrated axles 202A and 202B, with one implemented for each of the front axle 102A and the rear axle 102B, respectively. The integrated axles 202A and 202B are operated using the controller (not shown) and the electrical energy for these axles are provided by a common energy storage 110, such as a battery or a battery pack. The two integrated axles 202A and 202B may be separately and independently operated so as to be implementable as two separate and distinct motive power sources. Each integrated axle may include the same components, including for example an electric motor and a transmission as explained herein, that are separately operable from each other, although they may be operable together simultaneously as well, as suitably controlled by the controller.

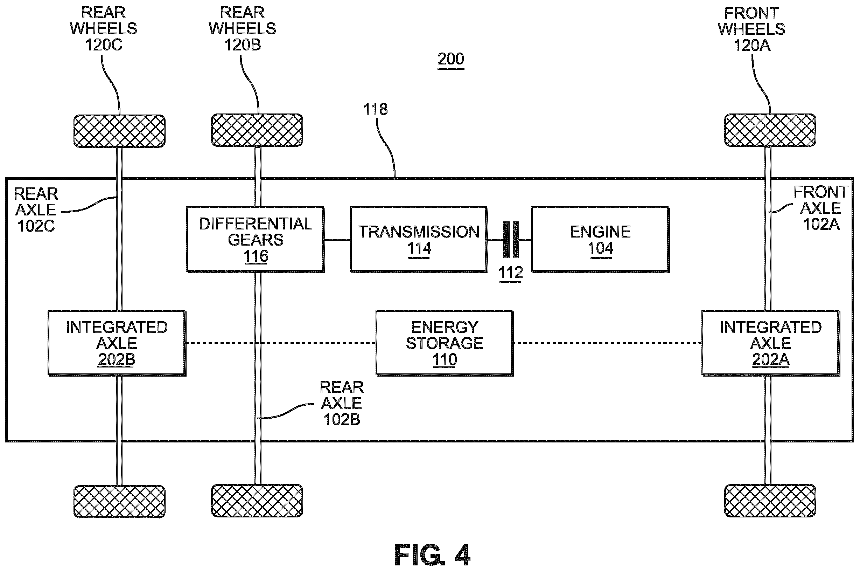

FIGs. 4 through 6 show examples of the system 200 where more than two axles (and in effect, more than four wheels) are implemented, with different combinations of integrated electrical axles and engine-powered axles implemented therein. It is to be understood that these figures are provided for illustrative purposes only, such that any additional number of axles may be implemented according to the need of the vehicle and its operation.

FIG. 4 shows an example of the system 200 which incorporates three axles 102A, 102B, and 102C, of which two of them, the front axle 102A and the rear axle 102C, have integrated axles 202A and 202B, respectively, coupled therewith. The other axle (rear axle) 102B is coupled with the engine 104 via the clutch 112, transmission 114, and differential gears 116 as shown. The integrated axles 202A and 202B are electrically powered by the energy storage 110.

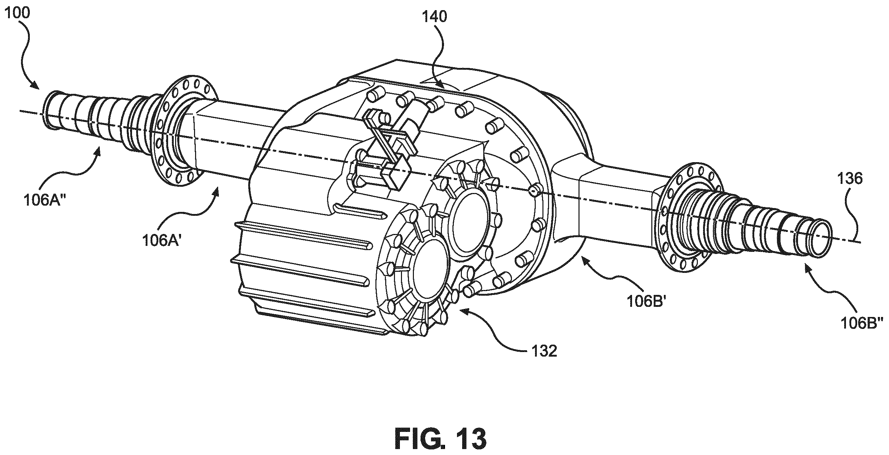

FIG. 13 shows an example of the system 200 with three axles 102A, 102B, and 102C, but instead of two integrated axles, only the front axle 102A is coupled with the integrated axle 202, and the two remaining rear axles 102B and 102C are coupled with differential gears 116A and 116B, respectively. The differential gears 116A and 116B are coupled with each other via the driveshaft 122 which may operate both of the gears simultaneously, using the power provided by the engine 104 and transferred through the transmission 114. As such, the rear axles 102B and 102C may be coupled with each other via the drift shaft 122.

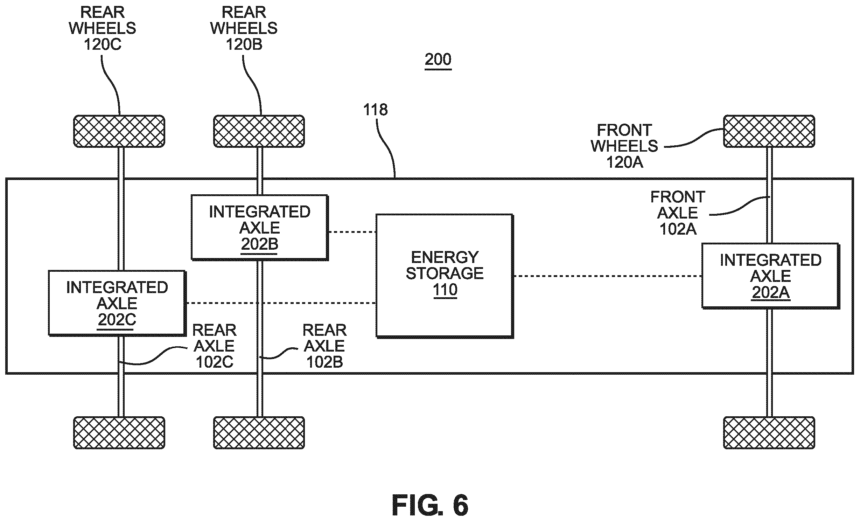

FIG. 6 shows an example of the system 200 with all three axles 102A, 102B, and 102C being powered electrically using the energy storage 110. That is, there are three integrated axles 202A, 202B, and 202C for the three axles, each independently operable, as controlled by a controller (not shown). In all examples disclosed herein, the front axle 102A is always implemented with an integrated axle, but the remaining axles may have integrated axles, engine-powered axles, or a combination of both.

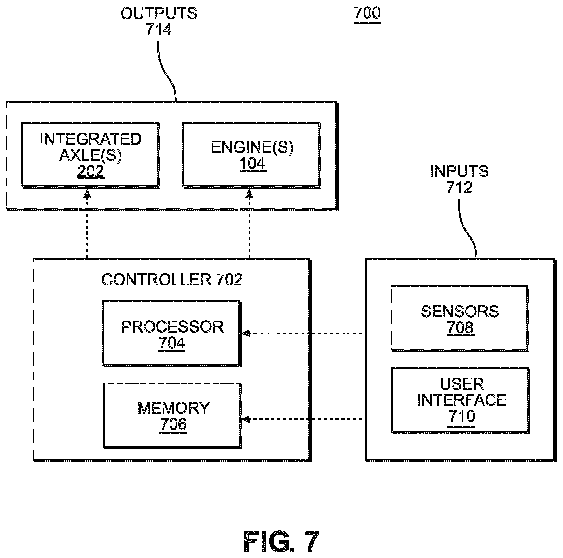

FIG. 7 shows an example of a control system 700 for the multi-mode hybrid vehicle system 200 as disclosed herein. The control system 700 includes a controller (multi-axle system controller) 702 which receives inputs 712 and controls the outputs 714. The controller 702 includes a processor 704 and a memory unit 706. The processor may be a microprocessor, a microcontroller, or any other suitable types of processing device or controller as known in the art. The controller 702 controls the operation of the integrated axle(s) 202 and engines 104 over communication lines, for example. It should be understood, however, that communication between controller and the integrated axle(s) and engine(s) may alternatively, or in addition, be performed wirelessly.

It should be understood that, in some embodiments, the controller 702 may form a portion of a processing subsystem including one or more computing devices having non-transient computer readable storage media, processors or processing circuits, and communication hardware. The controller 702 may be a single device or a distributed device, and the functions of the controller may be performed by hardware and/or by processing instructions stored on non-transient machine-readable storage media. Example processors include an application specific integrated circuit (ASIC), a field programmable gate array (FPGA), a digital signal processor (DSP), and a microprocessor including firmware. Example non-transient computer readable storage media includes random access memory (RAM), read only memory (ROM), flash memory, hard disk storage, electronically erasable and programmable ROM (EEPROM), electronically programmable ROM (EPROM), magnetic disk storage, and any other medium which can be used to carry or store processing instructions and data structures and which can be accessed by a general purpose or special purpose computer or other processing device.

Certain operations of the controller 702 described herein include operations to interpret and/or to determine one or more parameters. The parameters may be inputs 712 which may be information or data received from sensors 708 and/or user interface 710, among other means of providing inputs. The sensors may be any suitable sensor that can measure any change or increase in the load of the vehicle or the load applied on the vehicle. The sensors may include, but are not limited to, weight sensors which detect the physical weight of the vehicle and/or its cargo, gyroscopes which detect the incline or decline in which the vehicle may be traveling, and altimeters which detect the altitude or change in altitude as the vehicle travels, among others.

Interpreting or determining, as utilized herein, includes receiving sensor values by any method known in the art, including at least receiving values over communication lines, from a datalink, network communication or input device, receiving an electronic signal (e.g. a voltage, frequency, current, or pulse-width-modulation signal) indicative of the value, such as the current and expected loads of a vehicle as well as user's preference or whether the rear axles are approaching or reaching their performance limit, for example, as further explained herein, receiving a computer generated parameter indicative of the value, reading the value from a memory location on a non-transient machine readable storage medium, receiving the value as a run-time parameter by any means known in the art, and/or by receiving a value by which the interpreted parameter can be calculated, and/or by referencing a default value that is interpreted to be the parameter value.

The above-described embodiments of the technology described herein can be implemented in any of numerous ways. For example, the embodiments may be implemented using hardware, software or a combination thereof. When implemented in software, the software code (or software algorithm) can be executed on any suitable processor or collection of processors, whether provided in a single computing device or distributed among multiple computing devices. Such processors may be implemented as integrated circuits, with one or more processors in an integrated circuit component, including commercially available integrated circuit components known in the art by names such as CPU chips, GPU chips, microprocessor, microcontroller, or co-processor. Alternatively, a processor may be implemented in custom circuitry, such as an ASIC, or semicustom circuitry resulting from configuring a programmable logic device. As yet a further alternative, a processor may be a portion of a larger circuit or semiconductor device, whether commercially available, semi-custom or custom. As a specific example, some commercially available microprocessors have multiple cores such that one or a subset of those cores may constitute a processor. Though, a processor may be implemented using circuitry in any suitable format.

Further, it should be appreciated that a computing device may be embodied in any of a number of forms, such as a rack-mounted computer, a desktop computer, a laptop computer, or a tablet computer. Additionally, a computing device may be embedded in a device not generally regarded as a computing device but with suitable processing capabilities, including a Personal Digital Assistant (PDA), a smart phone or any other suitable portable or fixed electronic device.

Also, a computing device may have one or more input and output devices. These devices can be used, among other things, to present the user interface 710 (which may be an output device as well as an input device). Examples of output devices that can be used to provide a user interface include printers or display screens for visual presentation of output and speakers or other sound generating devices for audible presentation of output. Examples of input devices that can be used for a user interface include keyboards, and pointing devices, such as mice, touch pads, and digitizing tablets. As another example, a computing device may receive input information through speech recognition or in other audible format.

Such computing devices may be interconnected by one or more networks in any suitable form, including as a local area network, a controller area network, or a wide area network, such as an enterprise network or the Internet. Such networks may be based on any suitable technology and may operate according to any suitable protocol and may include wireless networks, wired networks or fiber optic networks.

Also, the various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine.

In this respect, the disclosed embodiments may be embodied as a computer readable storage medium (or multiple computer readable media) (e.g., a computer memory, one or more floppy discs, compact discs (CD), optical discs, digital video disks (DVD), magnetic tapes, flash memories, circuit configurations in Field Programmable Gate Arrays or other semiconductor devices, or other tangible computer storage medium) encoded with one or more programs that, when executed on one or more computers or other processors, perform methods that implement the various embodiments of the disclosure discussed herein. As is apparent from the foregoing examples, a computer readable storage medium may retain information for a sufficient time to provide computer-executable instructions in a non-transitory form. Such a computer readable storage medium or media can be transportable, such that the program or programs stored thereon can be loaded onto one or more different computers or other processors to implement various aspects of the present disclosure as discussed above. As used herein, the term "computer-readable storage medium" encompasses only a non-transitory computer-readable medium that can be considered to be a manufacture (i.e., article of manufacture) or a machine. Alternatively or additionally, the disclosure may be embodied as a computer readable medium other than a computer-readable storage medium, such as a propagating signal.

The terms "program" or "software" are used herein in a generic sense to refer to any type of computer code or set of computer-executable instructions that can be employed to program a computing device or other processor to implement various aspects of the present disclosure as discussed above. Additionally, it should be appreciated that according to one aspect of the disclosure, one or more computer programs that when executed perform methods of the present disclosure need not reside on a single computer or processor, but may be distributed in a modular fashion amongst a number of different computers or processors to implement various aspects of the present disclosure.

Computer-executable instructions may be in many forms, such as program modules, executed by one or more computers or other devices. Generally, program modules include routines, programs, objects, components, data structures, etc. that perform particular tasks or implement particular abstract data types. Typically, the functionality of the program modules may be combined or distributed as desired in various embodiments.

Also, data structures may be stored in computer-readable media in any suitable form. For simplicity of illustration, data structures may be shown to have fields that are related through location in the data structure. Such relationships may likewise be achieved by assigning storage for the fields with locations in a computer-readable medium that conveys relationship between the fields. However, any suitable mechanism may be used to establish a relationship between information in fields of a data structure, including through the use of pointers, tags or other mechanisms that establish relationship between data elements.

As discussed elsewhere herein, the axle assembly 100 may be provided with a motor vehicle like a truck, bus, farm equipment, mining equipment, military transport or weaponry vehicle, or cargo loading equipment for land, air, or marine vessels. The motor vehicle may include a trailer for transporting cargo in one or more embodiments. In general, the axle assembly (e.g., via a differential assembly) may be configured to transmit torque to vehicle traction wheel assemblies and may permit the traction wheel assemblies to rotate at different velocities. A drive pinion may be coupled to a torque source, such as a vehicle drivetrain component like a motor. Torque that is provided to the drive pinion may be transmitted to another component, such as a ring gear. Torque may be transmitted from the ring gear to at least one axle and from an axle to at least one corresponding wheel hub and/or traction wheel assembly. The axle assembly 100 may provide torque to one or more traction wheel assemblies that may include a tire mounted on a wheel. One or more axle assemblies may be provided with the vehicle. While FIGS. 1 through 7 focus on vehicle-level systems and integration-such as multi-axle powertrain configurations, control strategies, and the general arrangement of electric axles-the subsequent figures turn to the physical structure and mechanical layout of the axle assemblies themselves. The following figures illustrate various arrangements of electric motors, transmissions, and differentials within an axle housing and carrier, with particular attention to how torque is transmitted through the assembly. These views provide insight into packaging constraints, alignment strategies, and serviceability considerations that underlie the system-level advantages previously described.

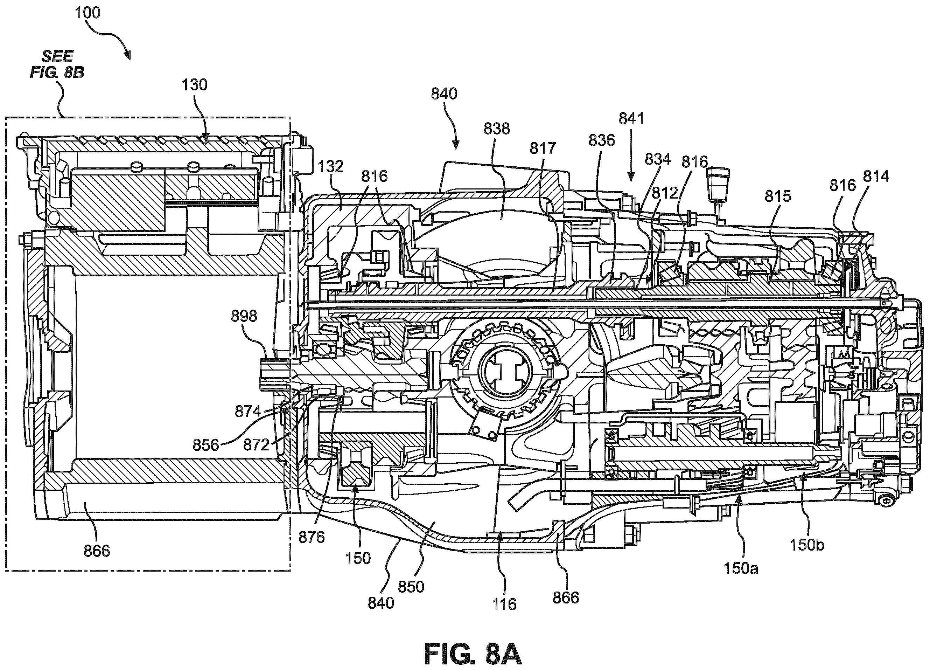

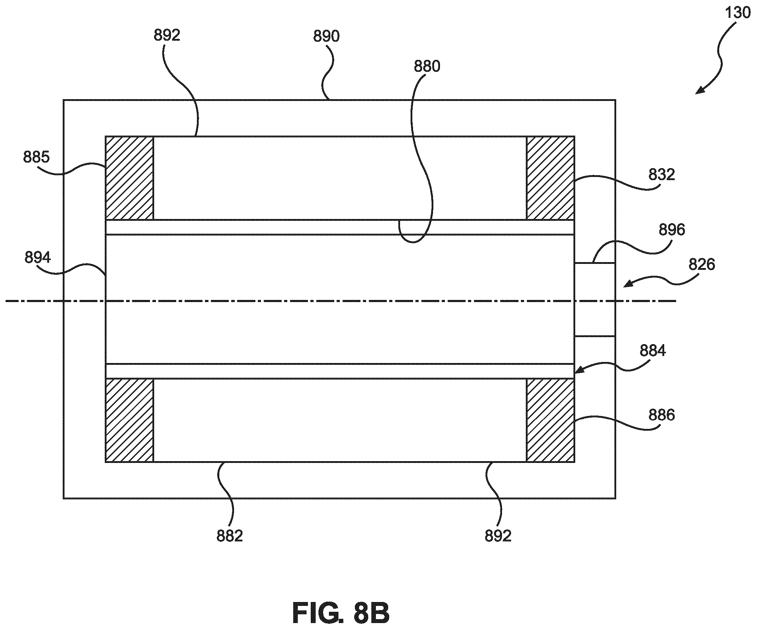

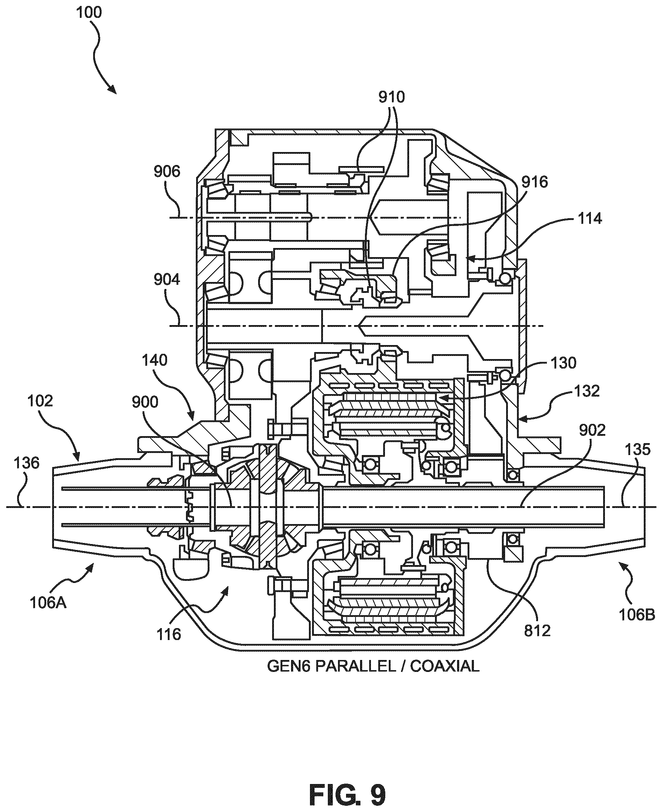

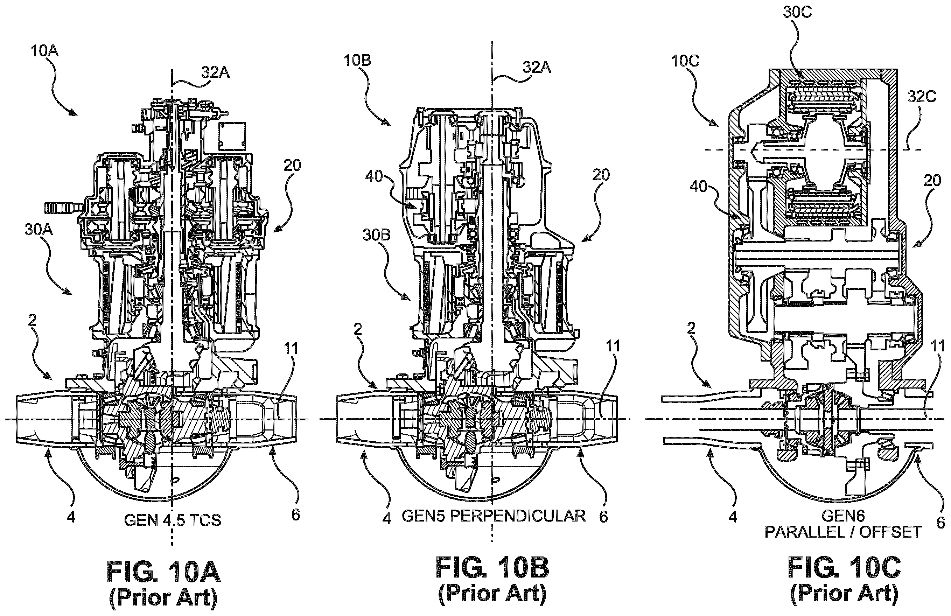

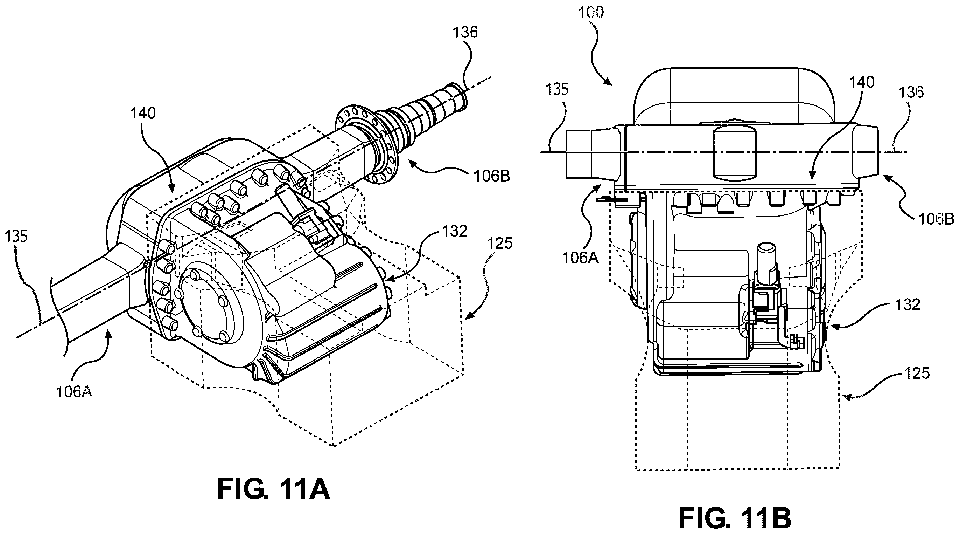

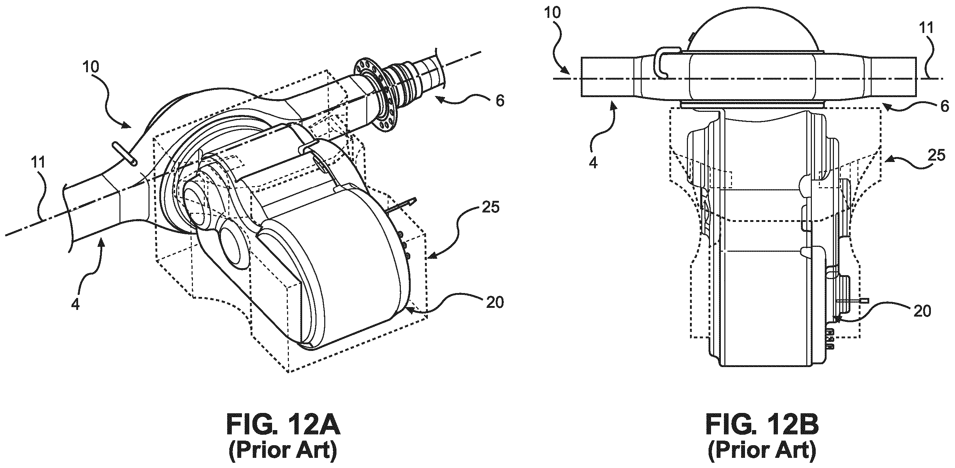

As backdrop for the following discussion, FIGS. 8A through 16B present various mechanical configurations, comparative references, and implementation details related to the axle assemblies discussed herein. FIGS. 8A and 8B illustrate a structural layout that contrasts with the present design, while FIGS. 10A through 10C and 12A through 12B are provided as prior art for comparison. FIGS. 9 and 11A-11B depict key aspects of the present disclosure, including the concentric and coaxial arrangement of rotating components and the compact packaging of the carrier within a vehicle envelope. FIGS. 13 through 16B expand upon these concepts by detailing component integration, torque flow across multiple gearsets, and methods for assembling and servicing the eAxle. Collectively, these figures support and further illustrate the structural and operational advantages of the concentric architecture described herein.

In more detail, FIGS. 8A and 8B illustrate an axle assembly in which an electric motor 130 is disposed on one side of a differential assembly 116 and a transmission 114 is disposed on the opposite side. In this configuration, torque is delivered from the electric motor 130, through a cross shaft 822, to a drive pinion 812, across the differential assembly 116, and out through the transmission 114. The cross shaft 822 bridges the lateral offset between the motor 130 and pinion 812 to facilitate torque transfer. Although the motor and axle shafts 106A, 106B are not necessarily concentric or coaxial in this design, the arrangement does distribute mass more evenly across the differential 116 compared to other alternatives. For example, the configuration shown in FIG. 10C positions both the electric motor and transmission on the same side of the differential, which may increase cantilevered loads and result in greater stress on the supporting structures. In contrast, the design of FIGS. 8A and 8B, while still offset, may provide a more balanced load distribution about the center of the axle housing 840.

FIGS. 10A-10C are provided as prior art references to illustrate conventional axle architectures. As noted, FIG. 10C shows a coaxial arrangement between the electric motor and drive pinion but with both components offset from the axle shaft, leading to increased cantilevered loads. These configurations are included for the purpose of distinguishing them from the present design, in which all major rotating components are coaxial. Similarly, FIGS. 12A and 12B are provided as prior art to illustrate installation space limitations of known axle assemblies. In contrast, FIGS. 11A and 11B demonstrate how the carrier 132 of the present design fits compactly within a vehicle envelope 125 while maintaining alignment with the axle shaft 102 and reducing packaging constraints. As such, FIGS. 10A-10C and 12A-12B serve as reference points for understanding how the present disclosure departs from conventional architectures.

The present design, illustrated in FIG. 9, eliminates the need for a cross shaft altogether by aligning the drive pinion 812, electric motor 130, and axle shafts 106A, 106B concentrically along a common axis of rotation. The electric motor 130 is positioned such that its axis 135 is coaxial with the drive axis 136 of the axle shafts and the drive pinion axis 902. The differential assembly 116 is centered along this same axis (e.g., along differential assembly axis 900), enabling direct torque transfer through aligned rotating components. This configuration reduces cantilevered loads, simplifies the mechanical layout, and improves structural balance, torque efficiency, and packaging.

The present disclosure is based on a concentric arrangement of components within the eAxle assembly 100. As used herein, the term "concentric" may refer broadly to two or more components that share either a common center point in a given plane (e.g., the x-y plane), a common axis of rotation, or both. These centers may take various forms depending on context-including a geometric center (defined by shape), center of mass (defined by material distribution), center of gravity (defined by gravitational influence), or center of rotation (defined by functional motion). In the present design, "concentric" captures the functional alignment of rotating components, such as the electric motor 130, axle shafts 106A, 106B, and drive pinion 812, which may rotate about the same centerline-even if their housing geometries or mass distributions produce slight physical offsets in other dimensions. For example, the stator 892 and rotor 894 may be arranged concentrically with the axle shafts 106A, 106B, even though structural elements on the motor housing 890 introduce an offset from the geometric center. This flexible use of "concentric" allows the present design to account for both functional and physical alignment across diverse component profiles.

The term "coaxial," as used herein, may refer more narrowly to components that share an exact common axis of rotation or centerline. In many instances, the concentric arrangement of components in the present design may also be coaxial-for example, where the drive axis of the axle shafts (e.g., axis 136), the electric motor axis (e.g., axis 135), and the drive pinion axis (e.g., axis 902) all lie along the same rotational centerline. However, because "concentric" encompasses both coaxial and near-coaxial alignment in functional terms, it may be preferred for use throughout the present specification and claims to more fully describe the intended scope of component alignment.

Turning again to FIG. 9, the illustration shows a cross-sectional view of the eAxle assembly 100 highlighting five generally parallel axes. The electric motor axis 135, axle drive axis 136, and drive pinion axis 902 may be coaxial and concentrically aligned. These coaxial axes are parallelly offset from the first and second transmission shaft axes, designated as axis 904 and axis 906, respectively. The spatial separation between the coaxial and transmission axes allows for efficient packaging of the gearsets 150a, 150b, 150c while preserving the integrity of the concentric drivetrain. This structural configuration supports the use of a three-speed transmission 114 and facilitates a serviceable, balanced carrier assembly 132.

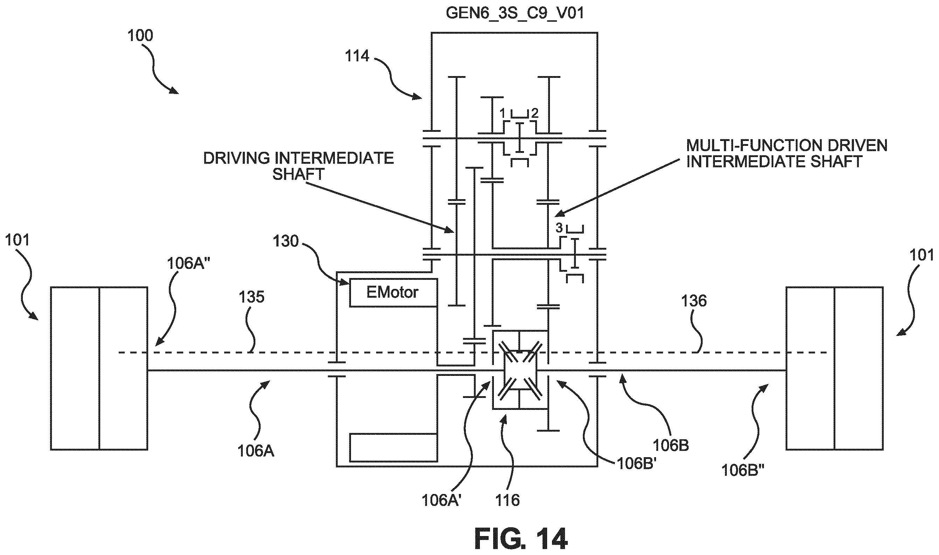

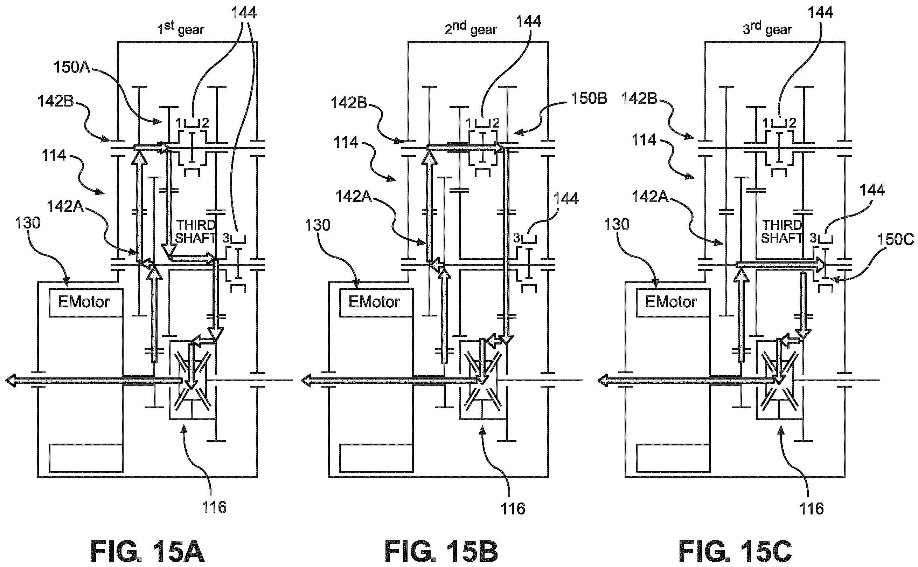

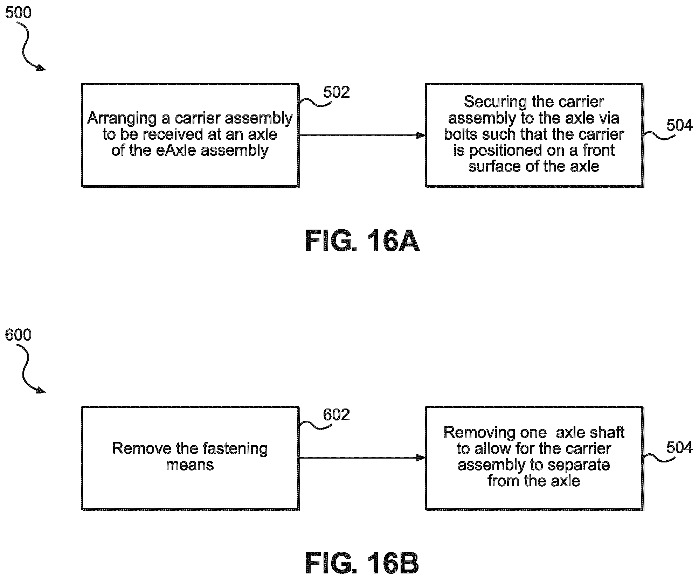

FIGS. 13 through 16B build upon the structural and functional principles illustrated in FIGS. 9 and 11A-11B. These subsequent figures provide additional detail on carrier design, power flow through the multispeed transmission 114, and methods of assembly and disassembly for the eAxle assembly 100. FIG. 13 offers a perspective view of the integrated axle, FIG. 14 highlights its connection to the vehicle drivetrain, and FIGS. 15A-15C trace torque flow through the first, second, and third gearsets 150a-150c. Finally, FIGS. 16A and 16B describe step-by-step assembly and service procedures that underscore the modularity and accessibility of the carrier 132. Together, these figures illustrate the implementation advantages of the present concentric and coaxial design.

Now referring to structural components shown in FIGS. 8A-8B, a housing assembly 820 may receive various components of the axle assembly 100. In examples, the housing assembly 820 may include an axle housing 840 and a carrier 132. In more detail, the axle assembly 100 may include a housing assembly 820 that houses a drive pinion 812, an electric motor 130, a gearset assembly 150, a shift mechanism 828, a differential assembly 116, and at least one axle shaft. The axle housing 840 may receive and support the axle shafts. The housing assembly 820 may facilitate mounting of the axle assembly 810 to the vehicle.

The electric motor 130 may be spaced apart from the axle housing 840 and may be disposed proximate the differential assembly 116. The electric motor 130 may be electrically coupled to a power source, such as a battery and/or capacitor that may provide and/or store electrical energy. For instance, an electrical connector module (not shown) may be provided with the electric motor 130 to facilitate electrical coupling. The electric motor 130 may provide torque to the drive pinion 812 when an electrical current is received. In addition, the electric motor 130 may generate electrical current in response to rotation of the drive pinion 812. For example, electrical current may be generated during regenerative braking or when the drive pinion 812 is rotated by a nonelectrical power source, such as an internal combustion engine.

In examples, the electric motor 130 may include a motor housing 890, a stator 892, a rotor 894, a coupling 896, and a driveshaft 898, as shown in FIGS. 8A and 8B. The stator 892 may be fixedly disposed in the motor housing 890.

The electric motor 130 such as the one illustrated here may be used in a vehicle such as a fully electric vehicle or a hybrid-electric vehicle. The electric motor 130 may be a permanent magnet machine, an induction machine, or the like.

The electric motor 130 includes a motor housing 890 that encloses the stator 892 (or stator core 892) and the rotor 894. The stator 892 is fixed to the motor housing 890 and includes a cylindrical stator core 892 having an inner diameter 880 (ID 880) that defines a hole 884, an outer diameter 882 (OD 882), a first end 885, and a second end 886. The stator core 892 may be formed from a plurality of stacked laminations. The rotor 894 is supported for rotation within a hole 884. The rotor 894 may include windings or permanent magnets that interact with windings of the stator 892 to generate rotation of the rotor 894 when the electric motor 130 is energized. The rotor 894 may be supported on a bearing 826 that extends through the motor housing 890. The rotor 894 is configured to couple with a drivetrain of the vehicle to output torque for vehicle propulsion or receive mechanical regenerative energy from vehicle motion.

The stator core 892 defines circumferentially arranged slots 832 around the stator core 892 and extending outward from the inner diameter 880. The slots 832 may be equally spaced around the circumference. As shown, the stator core 892 defines twenty-four slots and has eight poles (or 4 pole pairs). In examples, the stator core 892 may include more or fewer slots and/or poles. For example, the stator core 892 may define seventy-two slots and have eight poles (or 4 pole pairs).

One skilled in the art will appreciate this motor with different components, representing parts such as the rotor, stator, and other internal sections.

Based on the configuration of the carrier of the present disclosure, stator 892 may occupy a space within an oil sump of the axle assembly that allows for passive cooling of the stator. Cooling stator 892 passively may increase the heat load rejected to the oil sump for electric motor 130, requiring the system to pump oil to a heat exchanger for better thermal management.

The motor housing 890 may receive and/or support components of the electric motor 130. The motor housing 890 may be fixedly positioned with respect to differential assembly 116. The stator 892 may be radially disposed about an axis of rotation that may be coincident with a central axis of the driveshaft 898 and may include a plurality of windings as is known by those skilled in the art. The coupling 896 may be fixedly coupled to the driveshaft 898. For example, the coupling 896 may receive a portion of the driveshaft (e.g., at a splined portion of the driveshaft). A spline may be provided in the first coupling at a through hole that mates with a spline on the driveshaft. As such, the mating splines may cooperate to inhibit rotation of the coupling 896 with respect to the driveshaft 898. Further, one or more fasteners, such as a washer-nut combination, may be provided to inhibit axial movement of the coupling 896 with respect to the driveshaft 898. In this regard, a gear portion 899 of the driveshaft that is opposite the portion received by the first coupling can extend from the motor housing for engagement with a corresponding portion of the drive pinion.

Notably, the drive pinion is shown extending through the carrier as a cross shaft flanking the carrier and extending from a forward side (e.g., from the differential assembly to the electric motor) to the aft side of the axle assembly (e.g., from the differential assembly to the pinion, the transmission, and/or the roller bearing assembly). Under these circumstances, a central axis of a driveshaft of the electric motor can define a first axis 136 (or a "driveshaft" axis or "drive" axis) of the axle assembly. A central axis through the differential assembly along which one or more axles are received can define a second axis (or an axle shaft axis) of the axle assembly. And a central axis of the drive pinion (e.g., drive pinion 812) can define a third axis (or a drive pinion axis) of the axle assembly. As shown, the first and third axes are parallelly offset and at an angle (e.g., orthogonal or oblique angle) relative to the second axis. Torque transmission from the electric motor to traction assemblies can occur along these axes (e.g., from the first axis, to the third axis, to the second axis).

In examples, the axle housing 840 may include a center portion 850 and at least one arm portion 852. The center portion 850 may be disposed proximate the center of the axle housing 840. The center portion 850 may define a cavity that may receive the differential assembly 116. As is best shown in FIG. 9, a lower region of the center portion 850 may at least partially define a sump portion that may contain lubricant.

One or more arm portions 852 may extend from the center portion 850. For example, two arm portions 852 may extend in opposite directions from the center portion 850 and away from the differential assembly 116. The arm portions 852 may have substantially similar configurations. For example, the arm portions 852 may each have a hollow configuration or tubular configuration that may extend around the corresponding axle shaft and may help separate or isolate the axle shaft from the surrounding environment. An arm portion 852 or a portion thereof may be integrally formed with the center portion 850. Alternatively, an arm portion 852 may be separate from the center portion 850. In such a configuration, each arm portion 852 may be attached to the center portion 850 in any suitable manner, such as by welding or with one or more fasteners. Each arm portion 852 may define an arm cavity that may receive a corresponding axle shaft. It is also contemplated that the arm portions 852 may be omitted.

The carrier 132, which may also be called a carrier housing, may be mounted to the center portion 850 of the axle housing 840. A carrier cover 866 may be disposed on an end of the carrier 132 that may be disposed opposite the axle housing 840. The carrier 132 may receive the electric motor 130 and may support the differential assembly 116 in at least one cavity 868. The carrier cover 866 may partially define a junction box that may receive components that may facilitate electrical connections to the electric motor 130. The carrier cover 866 may be provided in various configurations. For example, the carrier cover 866 may enclose an end of the carrier 132 and may not support a Gearset assembly 150 in a configuration where a gearset assembly is not provided. Alternatively, the carrier cover 866 may support a gearset assembly 150.

Housing assembly 820 may include a cage 858 that covers at least a portion of a pinion assembly 814 to thereby form a portion of an exterior of the housing assembly. For instance, the pinion assembly can include an output shaft 815, one or more bearings 816, and a main shaft 817 that can function as a bearing support and/or a fastener. As shown, the output shaft is forward of the main shaft. The output shaft can engage the differential assembly through the plurality of selectable gear sets and a pinion assembly that is connected at a ring gear 838 of the differential assembly. The plurality of selectable gear sets includes first, second, and third gear sets 150a, 150b, 150c (shown better in FIGS. 15A-15C). The main shaft has an exterior at which one or more bearings can be mounted. In this manner, the main shaft can function as a bearing support for the one or more bearings. As shown, the main shaft may support a roller bearing assembly that may rotatably support the drive pinion 812. For example, two bearing supports of the main shaft may be received in the cage and may be located proximate opposite sides of the main shaft of the pinion. As it relates to the fastener, the main shaft can have one or more engagement features (e.g., threads to engage a nut, collars to engage a sleeve, knurling for press or shrink fits, etc.).

The bearing support may be provided in various configurations, including different numbers of bearings, one or more sleeves arranged between the main shaft and a bearing, an outer race arranged around the bearing, and the like. When provided, the outer race can be fixedly positioned relative to the cage or otherwise may remain stationary, and the bearing elements of the bearing may rotate along one or more surfaces of the outer race.

More toward the dynamic portions of the axle assembly 100, the drive pinion 812 may provide torque to a ring gear 838 that may be provided with the differential assembly 116. The drive pinion 812 may extend along and may be rotatable about the first axis while the ring gear 838 may be rotatable about a second axis 112. In examples, the drive pinion 812 may extend through the carrier cover 866.

In examples, the drive pinion 812 may include a spline portion 834, a coupler portion 836 that together form a shaft portion 822. The coupler portion 836 may be disposed at the coupler portion 836, which may have a plurality of teeth that mate with corresponding teeth on the spline portion. The spline portion 834 may be integrally formed with the corresponding shaft or may be provided as a separate component that may be fixedly disposed on the corresponding shaft. The shaft portion 822 may extend from the e-motor side to the transmission side to be connected to a pinion assembly.

As noted above, the pinion assembly can include an output shaft 815, one or more bearings 816, and a main shaft 817 that can function as a bearing support and/or a fastener. As shown, the output shaft is forward of the main shaft. The output shaft can engage the differential assembly through the plurality of selectable gear sets and a pinion assembly that is connected at a ring gear 838 of the differential assembly. The main shaft has an exterior at which one or more bearings can be mounted. In this manner, the main shaft can function as a bearing support for the one or more bearings. As shown, the main shaft may support a roller bearing assembly that may rotatably support the drive pinion 812. For example, two bearing supports of the main shaft may be received in the cage and may be located proximate opposite sides of the main shaft of the pinion. As it relates to the fastener, the main shaft can have one or more engagement features (e.g., threads to engage a nut, collars to engage a sleeve, knurling for press or shrink fits, etc.). For instance, a preload nut 852 may be threaded onto threads and may apply a preload force on the main shaft.

The bearing support may be provided in various configurations, including different numbers of bearings, one or more sleeves arranged between the main shaft and a bearing, an outer race arranged around the bearing, and the like. When provided, the outer race can be fixedly positioned relative to the cage or otherwise may remain stationary, and the bearing elements of the bearing may rotate along one or more surfaces of the outer race. In addition, or in alternative, an outer surface of the drive pinion may extend from the coupler portion 836 and may be an outside circumference of a portion of the shaft portion 822. One or more drive pinion bearings 816 may be disposed on the outer surface and may rotatably support the drive pinion 812. The drive pinion bearings 874 may have any suitable configuration. For instance, the drive pinion bearings 874 may be configured as roller bearing assemblies that may each include a plurality of rolling elements 870 that may be disposed between an inner race 872 and an outer race 874. The inner race 872 may extend around and may be disposed on the outer surface of the drive pinion. The outer race 874 may extend around the rolling elements 870. As shown, the outer race 874 may be disposed at the cage and/or at the axle housing. One or more spacer rings 876 may be disposed between the inner races 872 of the drive pinion bearings 874 to inhibit axial movement of the drive pinion bearings 874 toward each other.

One or more bearings supports may be provided by the shaft portion 822. The bearing supports may be integrally formed with the drive pinion 812, thereby providing a unitary or one-piece construction. In the figures, two bearings are shown as supported by the shaft portion 822, although it is contemplated that one bearing support or both bearing supports may be omitted in one or more embodiments. The two bearing supports may have similar configurations. For instance, the bearing supports may be generally configured as mirror images of each other in one or more embodiments. As such, common reference numbers are used to denote features of both bearing supports.

The spline portion 834 may be disposed at a first end of the shaft portion 822 for engagement with the pinion assembly. As shown, the splines may be received by the pinion. In this regard, the coupler portion 836 may be disposed opposite the spline portion 834 for engagement with the driveshaft of the electric motor (e.g., at a corresponding gear portion of the driveshaft). The spline portion 834 may include a plurality of teeth. The teeth may be disposed substantially parallel to the first axis and may mate with corresponding splines in the pinion assembly. Alternatively, the teeth of the spline may mate with a corresponding spline of an adapter that may couple the drive pinion 812 to the pinion, as is the case with other spline-to-spline connections discussed herein.

The electric motor 130 may be operatively connected to the differential assembly 116 and may provide torque to the differential assembly 116 via the drive pinion 812. As noted above, the electric motor 130 may be spaced apart from the axle housing 840 and may be disposed proximate the differential assembly 116. The electric motor 130 may be electrically coupled to a power source, such as a battery and/or capacitor that may provide and/or store electrical energy. For instance, an electrical connector module (not shown) may be provided with the electric motor 130 to facilitate electrical coupling. The electric motor 130 may provide torque to the drive pinion 812 when an electrical current is received. In addition, the electric motor 130 may generate electrical current in response to rotation of the drive pinion 812. For example, electrical current may be generated during regenerative braking or when the drive pinion 812 is rotated by a nonelectrical power source, such as an internal combustion engine.

In another example, the electric motor 130 may be received inside the carrier 132. For example, the electric motor 130 may be received in the outer cavity 80 of the carrier 132. In addition, the electric motor 130 may be axially positioned between the carrier cover 866 and the axle housing 840. As such, the electric motor 130 may be completely received inside of the carrier 132. Positioning the electric motor 130 inside the carrier 132, as opposed to being mounted outside or to an end of the carrier 132, may help further reduce the axial length or standout of the axle assembly 100, which may reduce package space, and may position the center of mass of the axle assembly 100 closer to the axle housing 840 and the second axis 112, which may help with balancing and mounting of the axle assembly 100.

The axle shafts may transmit torque from the differential assembly 116 to corresponding traction wheel assemblies. For example, two axle shafts may be provided such that each axle shaft extends through a different arm portion 852 of axle housing 840. The axle shafts may extend along and may be rotated about the second axis by the differential assembly 116. Each axle shaft may have a first end and a second end. The first end may be operatively connected to the differential assembly 116. The second end may be disposed opposite the first end and may be operatively connected to a wheel end assembly that may have a wheel hub that may support a wheel assembly 101.

A gearset assembly can transmit torque along the first, second, and/or third axes at predetermine ratios. As shown, a gearset assembly includes the gear portion of the drive pinion, the gear portion of the driveshaft, and optionally, a planetary gear. Planetary gearing can increase performance when handling heavy haul loads to provide optimum safety and performance in adverse conditions due to the engineering for max traction. Optionally, gear reduction may be provided between an axle shaft and a wheel.

The gearset assembly 150, if provided, may transmit torque from the electric motor 824 to the differential assembly 830. As such, the gearset assembly 150 may be operatively connected to the electric motor 824 and the differential assembly 830. A first gear reduction of the gearset assembly 150 can be achieved at mating gear portions of the driveshaft and the drive pinion. For instance, at this interface, there can be a drive ratio of about 2:1 (e.g., from about +/- 1% to +/-15%). This is just one example of the many drive ratios contemplated by this disclosure. It should be noted that any drive ratio can be employed and may be influence by the particular application and/or environment in which the axle assembly is employed.

Further, as noted above, central axis of the driveshaft and drive pinion can be parallelly and/or radially offset. In examples, this offset can occur via a parallelly offset gearbox. The gearset assembly 150 may be provided in various configurations, such as planetary gear set configurations and non-planetary gear set configurations. An example of a gearset assembly 150 that has a planetary gear set configuration is shown. In examples, the amount of offset can be adjustable. For instance, the offset can be calculated based on a variety of factors, including gear ratio and tooth count of gears (e.g., helical gears) of the driveshaft and/or drive pinion. Further, clocking of the offset (e.g., radial position relative to the driveshaft and/or drive pinion) can strategically position the electric motor to be in alignment with the axle. Such alignment can be important for clearances, including ground, brake, and suspension clearance. Clocking and offset can be calculated together and/or be dependent upon similar factors.

The multistage reduction gear set 150 may be primarily disposed outside of the axle housing, thereby providing a modular construction when desired. Such a configuration may allow for a standardized construction of the carrier 132 and/or the electric motor 130. For instance, the gearset assembly 150 may be disposed adjacent to and may be mounted to the carrier cover 866. In addition, the gearset assembly 150 may be primarily received or at least partially received in a gear cavity 867 of the carrier cover 866. As such, the gearset assembly 150 may be primarily disposed outside of the carrier 132.

The shift mechanism can be located between the carrier and the electric motor. The shift mechanism 828 may be disposed at an end of the axle assembly 100 that may be disposed opposite the axle housing 840. For example, the shift mechanism 828 may be disposed on the carrier cover 866. In at least one configuration, splines of the driveshaft may mate with corresponding splines of another component, such as a coupling or shift element that may operatively connect the driveshaft to the power source for driving the drive pinion. For instance, the shift element 910 may extend through components of the gearset assembly 150. In examples, the shift element 910 maybe operatively connected to an actuator 916. The actuator 916 may move the shift element 910 along the first axis between the first, second, and third positions. For example, the actuator 916 may be coupled to the shift element 910 with the linkage 340. The actuator 916 may be of any suitable type. For example, the actuator 916 may be an electrical, electromechanical, pneumatic or hydraulic actuator.

The gearset assembly 150 may cooperate with the shift mechanism 828 to provide a desired gear reduction ratio to change the torque provided from the electric motor 130 to the differential assembly 116, and hence to the axle shafts of the axle assembly 100. For example, the gearset assembly 150 may provide a first drive gear ratio and a second drive gear ratio. The first drive gear ratio, which may be referred to as a low range gear ratio, may provide gear reduction from the electric motor 130 to the differential assembly 116 and hence to the axle shafts. As a nonlimiting example, the first drive gear ratio may provide a 2:1 gear ratio or more. The first drive gear ratio may provide increased torque to a vehicle traction wheel as compared to the second drive gear ratio. The second drive gear ratio, which may be referred to as a high range gear ratio, may provide a different gear reduction ratio or lesser gear reduction ratio than the first drive gear ratio. For instance, the second drive gear ratio may provide a 1:1 gear ratio. The second drive gear ratio may facilitate faster vehicle cruising or a cruising gear ratio that may help improve fuel economy. In addition, a neutral drive gear ratio or neutral position may be provided in which torque may not be provided to the differential assembly 116 by the electric motor 130.

An electronic controller may control operation of the actuator 916 and hence movement of the shift element 910. An example of shifting of the shift element 910 will now be discussed in the context of an axle assembly 100 that has a gearset assembly 150 having a planetary gear configuration. Starting with the shift element 910 in the first position, the electronic controller may receive one or more inputs that may be indicative of speed (e.g., rotational speed of the rotor 164) and/or torque (e.g., torque provided by the electric motor). Shifting of the shift element 910 from the first position to the second position or neutral position may be commenced when the speed and/or torque exceed predetermined threshold levels. Torque on the shift element 910 may be temporarily relieved or reduced by controlling the rotational speed of the electric motor so that the shift element 910 may more easily be actuated from the first position to the second position. The shift element 910 may then be actuated from the second position to the third position. More specifically, the rotational speed of the shift element 910 may be synchronized with the rotational speed of the sun gear 900 and then the actuator 916 may be controlled to move the shift element 910 from the second position to the third position. The steps may be generally reversed to move the shift element 910 from the third position to the first position. For instance, torque on the shift element 910 may be temporarily relieved or reduced to allow the shift element 910 to move from the third position to the second position and rotational speed of the shift element 910 and a corresponding gear may be synchronized to allow the shift element 910.

The axle assembly described above may allow an electric motor to be assembled to or retrofitted on existing axle housings. In addition, a gearset assembly or gearset assembly accompanied by a shift mechanism may optionally be provided to provide gear reduction that may improve vehicle traction at low speeds or on increased road grades. The modular end-to-end positioning of the gearset assembly and the shift mechanism may allow gearset assembly s and shift mechanisms to be added to or removed from an axle assembly to meet operating conditions or performance requirements. Moreover, the modular construction may allow components such as the carrier, carrier cover, and shift mechanism housing to be made of a lighter weight material, such as aluminum, as compared to the axle housing, which may help reduce weight and improve fuel economy. The removable end plate may also allow the axle assembly to be coupled to a driveshaft which may allow the axle assembly to be provided as part of a parallel hybrid driveline rather than an all-electric configuration.

As shown in FIG. 9, the axle 102 may comprise a first axle shaft 106A, a second axle shaft 106B, and a drive axis 136 running through a distal end 106A", 106B'' of both axle shafts 106A, 106B. The axle 102 of the eAxle assembly 100 is configured to support at least one wheel assembly on the distal end 106A", 106B" of each of a first axle shaft 106A and a second axle shaft 106B and transfer power from a motor to the wheel assembly 101 to rotate wheels, driving a vehicle in a direction dictated by the direction of wheel rotation.

A carrier or "eCarrier" 132, discussed more below, may couple to a surface between the first axle shaft 106A and second axle shaft 106B such that the carrier 132 removably couples via fastening means, such as bolts, screws, or other suitable fasteners, to a front face 140 of the axle 102. A better view of the coupling of the carrier 132 to the axle 102 is shown in FIGS. 11A and 11B. The carrier 132 may be serviced by removing the fasteners and only one of the first axle shaft 106A and the second axle shaft 106B. To service the carrier 132, both the first axle 106A and the second axle 106B do not need to be removed. Known axle may comprise a carrier that requires removal and/or disassembly of both a first and second axle shaft to remove the carrier. The known first and second axle shafts may run thought the interior of the carrier such that to service the known carrier, the axle must be completely disassembled. The eAxle assembly 100 of the present disclosure provides an easily serviceable carrier 132 due to the position of the carrier on the axle 102.

Referencing FIGS. 9, 11A, 11B, and 13, the carrier assembly 132 is mounted to the front face 140 of the eAxle assembly 100. The carrier 132 may comprise a body configured to support internal components. The internal components may comprise an electric motor 130, power electronics, a transmission 114, a differential or differential gears 116 and a shifting assembly.

The electric motor 130 may be configured to convert electrical energy into mechanical torque generation to propel the vehicle. The electric motor 130 is positioned concentric with at least one axle shaft (e.g., axle shaft 106A and axle shaft 106B) such that an axis 135 of the electric motor 130, which may extend through the ends of the motor 130, is coaxial with the drive axis 136 of the at least one axle shaft 106A, 106B. By having an axis 135 of the electric motor 130 being coaxial with the drive axis 136, with the electric motor 130 concentrically positioned on the axle shaft 106B, as shown in FIG. 9, the components carried by the carrier 132 of the carrier assembly and the carrier 132 may advantageously provide a smaller overall package space and lighter system. Referring to FIGS. 11A and 11B, the carrier 132 of the present disclosure is compact and does not exceed the allotted space within an engine of a vehicle 125. This configuration of the electric motor 130 within the carrier 132 allows for smaller vehicles and reduces issues that arise from space constraints. Further, by having the carrier 132 coupled to the axle 102 such that the majority of the components of the carrier 132 are close to the front surface 108 of the axle 102, the center of gravity of the eAxle assembly is balanced over the axle 102.

Known eAxle assemblies 10 are shown in FIGS. 10A, 10B and 10C. The known eAxle assemblies 10a, 10b, 10c comprise an axle 2 including a first axle shaft 4 and a second axle shaft 6 that sit on a drive axis 11, and a carrier 20 including an electric motor 30 and a transmission 40. The electric motors 30a, 30b of assemblies 10a, 10b of FIGS. 10A and 10B have a first axis 32a, 32b, that is perpendicular with the drive axis 11 of the axle 2. Because of the perpendicular electric motor 30a, 30b, the body of the carrier 20 must be larger to encompass the increased area of the electric motor 30a, 30b. Further, having a parallel first axis of the electric motor 20 necessitates the use of a bevel drive gear that transfers the power perpendicular. By adding the bevel drive gear, the eAxle assemblies 10a, 10c have a higher chance of slip and loss of efficiency.

Similarly, the known eAxle assembly 10c of FIG. 11C is larger than the eAxle assembly 100 of the present disclosure. eAxle assembly 10c has an electric motor 30c that has a first axis 32c that is parallel to the drive axis 11 of the axle 2. However, the first axis 32c of the electric motor 30c is off set (not coaxial) from the drive axis 11. The off set electric motor 30c also increases the necessary size of the carrier 20. Larger carriers may have trouble fitting into an electric vehicle and use more materials to manufacture, increasing the costs. As shown in FIGS. 12A and 12B, the increased size of known carriers 20 may exceed the available space 25 in a vehicle for the eAxle assembly. Further, with an elongated carrier 20, the center of gravity for the known eAxle assemblies 10a, 10b, 10c is away from the axle 2 and may be unbalanced.

The carrier 132 of the present disclosure may comprise power electronics configured to control a flow of electricity at the electric motor 130. Power electronics may include an inverter, and, in some examples, a cooling circuit to reduce cost and increase efficiency in a single component.

The carrier 132 may further comprise a transmission 114 configured to transmit torque from the electric motor 130 to components geared to a transmission output and operatively connected to the axle 102 to rotate the axle 102 about the drive axis 136, as shown in FIGS. 14, 15A, 15B, and 15C. The carrier 132 may further comprise the differential or differential gears 116, the shifting assembly (not shown, similar to mechanism 916), and shift elements 144 (similar to elements 910). The differential 116 may comprise a plurality of gearsets 150, a shifting assembly, and a differential 116.

The transmission 114 may be a multispeed transmission, such as a three-speed transmission. The transmission 114 may be geared to the electric motor 130 via a plurality of gearsets 150 such that the transmission 114 may transmit the torque generate by the electric motor 130 to traction components at a speed and torque that is a multiple thereof.

The plurality of gearsets 150 is optimized to most efficiently operate at a gearset associated with the highest speed. In one embodiment, the plurality of gearsets 150 may comprise a first gearset 150a, a second gearset 150b, and a third gearset 150c. The plurality of gearsets 150 may be operatively connected to at least one transmission shaft 142 (similar to axes 904 and 906). The at least one transmission shaft 142 may comprise a first transmission shaft 142a and a second transmission shaft 142b. The first gearset 150a may be associated with a first speed, the second gearset 150b may be associated with a second speed that is greater than the first speed, and the third gearset 150c may be associated with a third speed that is greater than the first and second speeds. FIGS. 15A-15C show flow diagrams as the transmission 114 shifts through the first gearset 150a in FIG. 15A, the second gearset in FIG. 15B, and the third gearset 150c in FIG. 15C. To transmit torque through the first and second gearsets 150a, 150b the transmission 114 may transmit torque through both the first and second transmission shafts 142a, 142b. However, to transmit torque through the third gearset 150c, the transmission 114 may transmit torque through only the first transmission shaft 142a. By transmitting torque through only one transmission shaft 142, the third gearset 150c may be more efficient than gearsets that require engaging both the first and second transmission shafts 142a and 142b.

The shifting assembly may be configured to shift between gears 150a, 150b, 150c of the transmission 114. The shifting assembly may comprise a shift lever, shift forks, shift rails, and synchronizers configured to smoothly shift between gearsets during operation of the vehicle.

The differential assembly 170 may be configured to couple to at least one axle shaft 106A, 106B of the axle 102. The axle shafts 106A, 106B may transmit torque from the differential assembly 170 to corresponding wheel assemblies 101. A proximal end 106A', 106B', of each of the first axle shaft 106A and the second axle shaft 106B may be operatively connected to the differential assembly 170.

The differential assembly 170 may be configured to allow the wheel assemblies 101 of the vehicle to rotate at different speeds by splitting the torque from the transmission between wheel assemblies.

The present disclosure provides a method 500 of assembling the eAxle assembly, FIG. 16A, comprising arranging a carrier assembly to be received at an axle of the eAxle assembly, as shown in step 502, and securing the carrier assembly to the axle via bolts such that the carrier is positioned on a front surface of the axle, as shown in step 504. By assembling the eAxle assembly in this way, the carrier may be serviced without removing the entire axle. A method of removal of the carrier from the axle 600, FIG. 16B, may comprise removing the bolts or other fastening means from the front surface of the axle, shown in step 602, and removing only one axle shaft to allow for the carrier assembly to separate from the axle, shown in step 604.

Further, the carrier of the present disclosure may allow for servicing of one axle of a vehicle without removing or disturbing any other axle. Thus, in a vehicle including first axle, a second axle, and the eAxle assembly of the present disclosure, the first axle may be serviced without disturbing or removing the second axle of the vehicle.

While this disclosure has been described as having an exemplary design, the present disclosure may be further modified within the scope of this disclosure. This application is therefore intended to cover any variations, uses, or adaptations of the disclosure using its general principles. Further, this application is intended to cover such departures from the present disclosure as come within known or customary practices in the art to which this disclosure pertains.

## Claims

1. A carrier assembly for an electrified axle (eAxle), comprising:
a carrier configured to mount to a housing of the eAxle;
an electric motor carried by the carrier, the electric motor being configured to convert electrical energy into mechanical torque; and
an axle shaft extending concentrically through the electric motor, such that an axis of the electric motor is coaxial with an axis of the axle shaft,
wherein the axle shaft is configured to receive the mechanical torque.

2. The carrier assembly of claim 1, wherein the electric motor further comprises:
a motor housing configured to be carried by the carrier:
an oil sump;
a stator: and
a rotor;
wherein the stator is fixed to the motor housing; and
wherein the axis of the electric motor that is coaxial with the axis of the axle shaft is a rotational axis of the rotor.

3. The carrier assembly of claim 2, wherein the stator is passively cooled by the oil sump.

4. The carrier assembly of any previous claim, wherein the carrier further comprises:
a transmission assembly electrically coupled to the electric motor;
wherein the transmission assembly comprises a plurality of transmission shafts;
a differential assembly operatively coupled to the transmission assembly;
wherein the differential assembly comprises a plurality of gearsets each operably coupled to at least one of the plurality of transmission shafts and configured to transmit torque from the transmission assembly to the axle shaft; and
a shifting assembly configured to shift between the plurality of gearsets.

5. The carrier assembly of claim 4, wherein the axle shaft transmits torque from the differential assembly to corresponding traction wheel assemblies.

6. The carrier assembly of claim 4 or claim 5, wherein the plurality of transmission shafts comprises a first transmission shaft and a second transmission shaft;
wherein the plurality of gearsets includes a first gearset associated with a first speed, a second gearset associated with a second speed that is greater than the first speed, and a third gearset associated with a third speed that is greater than the first and second speeds;
wherein transmitting torque through the first gearset and the second gearset includes transmitting torque through the first transmission shaft and the second transmission shaft of the plurality of transmission shafts; and
wherein transmitting torque through the third gearset includes transmitting torque through the first transmission shaft only.

7. The carrier assembly of any of claims 4 to 6, wherein the shifting assembly comprises a shift lever, shift forks, shift rails, and synchronizers; and
wherein the synchronizers are configured to shift between the plurality of gearsets during operation of the electric motor.

8. An electrified axle (eAxle) for a vehicle, comprising:
an axle housing configured to mount to the vehicle; and
the carrier assembly of any previous claim.

9. A method of assembling an eAxle assembly for an electric vehicle, the method comprising:
arranging a carrier assembly to be received at an axle housing of the eAxle assembly, the carrier assembly comprising:
an electric motor configured to convert electrical energy into mechanical torque generation to propel the electric vehicle; and
an axle shaft concentrically arranged with the electric motor such that an axis of the electric motor is coaxial with an axle shaft axis,
wherein the axle shaft is configured to receive the mechanical torque;
securing the carrier assembly to the axle housing.

10. The method of claim 9, wherein the carrier further comprises:
power electronics configured to control a flow of electricity at the electric motor; and
a transmission configured to transmit torque from the electric motor to traction components geared to a transmission output and operatively connected to the eAxle.

11. The method of claim 10, wherein the transmission is a multispeed transmission geared to the electric motor via a plurality of gearsets, the multispeed transmission configured to transmit the torque generated by the electric motor to the traction components at a speed and a torque that is a multiple thereof, optionally wherein the multispeed transmission is a 3-speed transmission.

12. The method of claim 11, wherein the plurality of gearsets is optimized to most efficiently operate at a gearset associated with the highest speed.

13. The method of claim 11 or claim 12, wherein the transmission comprises a plurality of transmission shafts;
wherein the plurality of gearsets is operatively connected to the plurality of transmission shafts; and
wherein the plurality of gearsets is configured to receive mechanical torque from the electric motor and transfer the mechanical torque to the axle shaft.

14. The method of any one of claims 11 to 13, wherein the plurality of transmission shafts comprises a first transmission shaft and a second transmission shaft;
wherein the plurality of gearsets includes a first gearset associated with a first speed, a second gearset associated with a second speed that is greater than the first speed, and a third gearset associated with a third speed that is greater than the first and second speeds;
wherein transmitting torque through the first gearset and the second gearset includes transmitting torque through the first transmission shaft and the second transmission shaft of the plurality of transmission shafts; and
wherein transmitting torque through the third gearset includes transmitting torque through the first transmission shaft only.

15. The method of any one of claims 9 to 14, wherein the carrier assembly is configured to be serviced without removing the axle shaft from the eAxle assembly.
